# EUROPEAN PATENT APPLICATION

(11) **EP 4 439 817 A1**
(43) Date of publication of application: **02.10.2024**
(21) Application number: 22898412.6
(22) Date of filing: 10.11.2022
(51) Int. Cl.: H01M 50/204, H01M 50/296, H01M 50/588, H01M 50/59

(54) **BATTERY PACK**

(30) Priority: 25.11.2021 JP 2021191166
(71) Applicant: Panasonic Energy Co., Ltd., Osaka 570-8511 (JP)
(72) Inventor: KAWAKAMI, Satoshi, Kadoma-shi, Osaka 571-0057 (JP)
(74) Representative: Novagraaf International SA
(86) International application number: PCT/JP2022/041887
(87) International publication number: WO 2023/095628

(57) **Abstract**

A battery pack includes a battery module accommodated in an exterior case. The exterior case has a watertight structure and a volume to allow the battery pack to have an overall specific gravity of 1 or less. The inner wall is molded unitarily with the exterior case along an inner surface of the exterior case. An air layer with a watertight structure is formed between the inner wall and the exterior case. The exterior case has a multilayer float structure including the exterior case, the air layer, and the inner wall. An inside of the inner wall has a watertight structure and constitutes a battery module housing part housing the battery module therein.

## Description

### Technical Field

The present disclosure relates to a battery pack configured to float while being dropped into water.

### Background Art

A battery pack configured to float on water does not sink even when the battery pack is dropped into water, and is recovered and reused. The battery pack is used, for example, as power sources for motorized outboard engines and various devices used on a ship. The battery pack for this use is recovered and reused even if the battery pack is accidentally dropped in sea water during handling on board, for example, during attachment and detachment of the battery pack. As a battery pack configured to float on water, a battery pack with a float attached externally is described in, for example, PTL 1.

### CITATION LIST

### Patent Literature

PTL1: Japanese Patent Laid-Open Publication No. 2012-146434

### SUMMARY OF THE INVENTION

A battery pack with a float externally attached is bulky and has a large outer dimension. The externally attached float interferes with handling and makes handling inconvenient. In particular, in a large and heavy battery pack used as a power source for an outboard motor, the externally attached float interferes with handling and makes handling inconvenient. In particular, in this battery pack, the float may inhibit smooth attachment and detachment. Furthermore, since a watertight structure may not be maintained when the externally attached float is broken, sufficient strength is required, which causes problems that the float becomes heavier and larger.

The present disclosure is developed for a purpose of dissolving the above-mentioned problems, and one object of the present disclosure is to provide a battery pack having a multilayer float structure in which an inner wall is molded unitarily with an inner surface of an exterior case so as to allow the battery pack to float and be recovered when the battery pack is dropped into water.

A battery pack in accordance with an aspect of the present disclosure includes a battery module, an exterior case, and an inner wall. The exterior case accommodates the battery module therein. The exterior case has a watertight structure and a volume to allow the battery pack to have an overall specific gravity of 1 or less. The inner wall is molded unitarily with the exterior case along an inner surface of the exterior case. An air layer with a watertight structure is formed between the inner wall and the exterior case. The exterior case has a multilayer float structure including the exterior case, the air layer, and the inner wall. An inside of the inner wall has a watertight structure and constitutes a battery module housing part housing the battery module therein.

This battery pack has a multilayer float structure including the exterior case, the air layer, and the inner wall in which the inner wall unitarily molded along the inner surface of the exterior case and the air layer has a watertight structure along the inner surface of the exterior case. Therefore, the buttery pack has an advantage of being not bulky and having an overall specific gravity of 1 or less, and being configured to float reliably and be recovered when the buttery pack is dropped into water. In particular, the multilayer float structure in which the inner wall is disposed inside the exterior case, which is designed to be sufficiently strong in consideration of impact resistance and the like, via the air layer that absorbs impact provides the battery pack with an advantage of preventing damage of the exterior case due to drop and preventing water from entering the inside, and being configured to reliably float on a surface of the water and be recovered when the buttery pack is dropped. Furthermore, the above battery pack provides an advantage that the outer shape is suitable for use and be configured to float on water and recovered without allowing the float to protrude locally to the outside unlike conventional battery packs with a float attached externally.

Since this battery pack has a multilayer float structure by unitarily molding the exterior case and the inner wall with a molding material such as plastic to provide the air layer and the inner wall at the inner side of the exterior case, the multilayer float structure is achieved in molding of the exterior case. Therefore, exterior cases including a multilayer float structure inside are efficiently mass-produced. Furthermore, since an air layer is provided by unitarily molding the exterior case and the inner wall and coupling the exterior case with the inner wall reliably in a watertight structure, and the inner side of the inner wall is a watertight structured battery module housing part, a battery module is disposed in the battery module housing part preventing water from entering into the battery module.

In a battery pack according to another aspect of the present disclosure, a volumetric capacity of the battery module housing part may be a volumetric capacity to allow the battery pack to have an overall specific gravity of 1 or less while water enters the air layer and reduces buoyancy.

This above battery pack advantageously float on water even if a part of the exterior case is broken and water enters the air layer. This is because the volumetric capacity of the battery module housing part is a volumetric capacity that allows the battery pack to float on water even if the exterior case is damaged and water enters the air layer. In particular, the battery module housing part has a watertight structure with the inner wall, and furthermore the battery pack includes the exterior case on the outside of the inner wall via the air layer to form a multilayer float structure. Therefore, even if a part of the exterior case is broken due to a particularly strong impact, the inner wall is not broken, and the battery module housing part has a watertight structure by the inner wall, hence being configured to float on a surface of water. This is because an air layer is provided between the exterior case and the inner wall, the air layer prevents the exterior case from being broken, and furthermore, the inner wall is disposed at the inner side of the exterior case via the air layer.

In a battery pack according to still another aspect of the present disclosure, an air layer may be partitioned into plural regions having watertight structures.

The above battery pack is configured to float on a surface of water even if any one of the air layers is broken due on an impact such as being dropped, water is prevented from entering the other regions of the air layer partitioned in a watertight structure. This battery pack is advantageously configured to float even when a particular air layer is broken, while the entire size is reduced. This is because the buoyancy in only the specific broken air layer is reduced and the buoyancy of the air layer that has not broken is not lost. Furthermore, in this battery pack, since the volumetric capacity of the air layer increased and the buoyancy is increased, the volumetric capacity of the battery module housing part is reduced, and, that is, the battery module housing part has a minimum volumetric capacity capable of housing the battery module, and increase the volumetric capacity of the air layer to make the overall specific gravity be 1 or less. The ability to increase the volumetric capacity of the air layer advantageously enhances the impact resistance by the cushioning effect of the air layer.

In a battery pack according to still another aspect of the present disclosure, in the air layer, partition ribs connected to the exterior case and the inner wall may be provided to partition the air layer into plural regions. The partition ribs may be molded unitarily with the exterior case and the inner wall.

In the above battery pack, the ribs unitarily molded with the exterior case and the inner wall partition the air layer into plural regions, and may be used as reinforcing ribs for enhancing the impact resistance of the exterior case.

In a battery pack according to still another aspect of the present disclosure, a pair of partition ribs may be provided at both side of a corner part of the exterior case. A corner air layer is divided into watertight structures among the pair of the partition ribs.

The above battery pack advantageously prevents the exterior case from being damaged to effectively prevent entering of water into the air layer since the corner parts of the exterior case, which are most susceptible to impact, are reinforced by partition ribs. Furthermore, a corner air layer provided between the pair of partition ribs may effectively absorb impact received by the corner part of the exterior case, and suppresses a damage of the exterior case.

In a battery pack according to still another aspect of the present disclosure, a volumetric capacity of a battery module housing part may be a volumetric capacity with an overall specific gravity of 1 or less while water enters the corner air layer and reduces buoyancy.

The above battery pack has an overall specific gravity of 1 or less and is configured to float on water while the corner parts of the exterior case, which are most susceptible to impact, even if the corner parts of the exterior case are damaged by a particularly strong impact and water enters the corner air layer. Furthermore, the battery pack is advantageously configured to float on water even if water enters the corner air layer and reduces an increase of volumetric capacity of the battery module housing part and making the outer shape compact, because the overall specific gravity is maintained at 1 or less even if water enters the corner air layer and the buoyancy is reduced.

In the battery pack according to still another aspect of the present disclosure, the exterior case includes an outer peripheral wall, and the air layer is provided at positions of the outer peripheral wall facing each other.

Since the above battery pack includes the air layer in the facing outer peripheral wall, by balancing the air layers in the facing positions, the battery pack is configured to float in a horizontal position. The battery pack may advantageously be recognized from a distant position, for example, from a ship by increasing an area of the exposed part exposed on the surface of water. A battery pack dropped into the sea is hardly found from a ship in a distant position even if the battery pack floats on water. This is because a surface of water is not always flat like the ground, and even if a battery pack floats up, it does not rise entirely from the surface of the sea and because a floating subject moves up and down and appears and disappears due to waves. For this reason, it is extremely important to be able to expose a large area to the surface of water in order to reliably find a dropped object in the water.

In a battery pack according to still another aspect of the present disclosure, the exterior case has a rectangular shape in a plan view, and the air layer may be disposed on an inner surface of the outer peripheral wall positioned on each side of the rectangular shape.

The above battery pack has an advantage that since the center of gravity of the entire battery pack may be placed in the middle of the exterior case, the battery pack is configured to float up in a more ideal horizontal position, and the exposed surface that floats up and is exposed to the surface of the water is increased, and the floating battery pack may be recognized from a distant position, for example, from a ship.

In a battery pack according to still another aspect of the present disclosure, the exterior case has a watertight structure and a volume to cause the battery pack to have with an overall specific gravity of less than 1.

The above battery pack is configured to reliably float on water including pure water.

A battery pack according to still another aspect of the present disclosure is configured to float in water.

In a battery pack according to till aspect of the present disclosure, a waterproof output terminal may be fixed to an exposed part of the exterior case configured to float on water and exposed from the surface of the water.

The above battery pack including the waterproof output terminal on the exposed part of the exterior case reduces a leakage current between the output terminals while the battery pack floats up on water. This feature is important when a battery pack with a high output voltage is dropped into water with a low electrical resistance (for example, seawater). This is because a leakage current between the output terminals increases in proportion to the output voltage and in inverse proportion to the electrical resistance of water.

In a battery pack according to still another aspect of the present disclosure, the exterior case includes a lower case having an upper opening and an upper case closing the upper opening of the lower case to have a watertight structure. The lower case and the upper case are coupled to each other in a watertight structure.

The battery pack described above is advantageous that the lower case and the upper case are coupled to each other in a watertight structure and a floating structure is sealed in a watertight structure. In particular, the battery pack is advantageous that an air layer of the lower case formed by unitarily molding the exterior case and the inner wall, and by providing an air layer at the inner side of the exterior case, and an air layer at the inner side of the exterior case may have a watertight structure.

### BRIEF DESCRIPTION OF THE DRAWINGS

FIG. 1 is a perspective view of a battery pack according to an exemplary embodiment of the present disclosure.
FIG. 2 is an exploded perspective view of the battery pack shown in FIG. 1.
FIG. 3 is a partially enlarged sectional view of the battery pack taken along line III-III shown in FIG. 1.
FIG. 4 is a plan view of a lower case and a battery module of the battery pack shown in FIG. 2.
FIG. 5 is a side view of the battery pack shown in FIG. 1 floating on water.
FIG. 6 is an enlarged sectional view of the battery pack taken along line VI-VI shown in FIG. 1.
FIG. 7 is an exploded perspective view of a battery pack in accordance with another exemplary embodiment of the present disclosure.
FIG. 8 is a horizontal sectional view of a battery pack in accordance with still another exemplary embodiment of the present disclosure.

### DESCRIPTION OF EMBODIMENT

The present disclosure will be detailed below based on the drawings. In the following description, terms indicating specific directions and positions (for example, "upper," "lower," and other terms including these terms) are used, as necessary. However, these terms are used to facilitate understanding of the disclosure with reference to the drawings, and the technical scope of the present invention is not limited by the meaning of these terms. Furthermore, parts with the same reference numerals in a plurality of drawings indicate the same or equivalent parts or members.

Exemplary embodiments described below are examples of the technical idea of the present invention, and the present invention is not limited to the following exemplary embodiments. The dimensions, materials, shapes, relative arrangements, and the like, of the components described below are not intended to limit the scope of the present disclosure thereto but are intended to show examples, unless specifically stated. The contents described in relation to one exemplary embodiment and example can be applied to other exemplary embodiments and examples. The sizes and positional relationships of members shown in the drawings may be exaggerated in order to clarify the explanation.

### Exemplary Embodiment 1

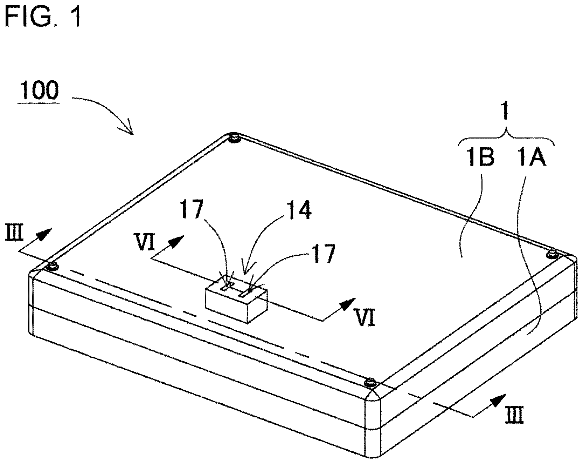

Battery pack 100 shown in FIGS. 1 to 4 includes battery module 2 accommodated in exterior case 1 with a watertight structure, and has an overall specific gravity of 1 or less by increasing buoyancy than weight. The overall specific gravity of battery pack 100 may preferably be less than 1. Thus, battery pack 100 is configured to reliably float on sea water, or water, such as general water, having a specific gravity of more than 1, or pure water. Battery module 2 includes a battery block including plural unit cells connected in series or in parallel to one another, and a circuit board connected to the battery block. In a battery block, unit cells are connected in series or in parallel to one another and each unit cell is disposed in a fixed position with a battery holder in order to provide a required rechargeable capacity. The circuit board is connected to the battery block and a protection circuit for controlling the charging and discharging of the battery block is mounted. The unit cell is, for example, a secondary battery, such as a lithium-ion battery. Battery module 2 including a lithium-ion secondary battery as a unit cell has a large rechargeable capacity with respect to its volume and weight. However, the unit cell of the battery block is not limited to a lithium-ion secondary battery, and any secondary battery currently used or developed in the future, such as all-solid batteries, can also be used.

### Exterior Case 1

Exterior case 1 may be manufactured by molding an insulating material, such as plastic. Exterior case 1 shown in FIGS. 1 to 4 includes inner wall 3 molded unitarily with exterior case 1 along an inner surface of exterior case 1 to provide a multilayer float structure. The multilayer float structure includes exterior case 1, air layer 4, and inner wall 3 to provide a multilayer structure by molding inner wall 3 unitarily with the inside of exterior case 1 along the inside of exterior case 1, and preferably in parallel to exterior case 1. Air layer 4 is provided with a watertight structure between exterior case 1 and inner wall 3. Inner wall 3 that forms air layer 4 between inner wall 3 and exterior case 1 has watertight-structured battery module housing part 5 in the inside of inner wall 3 where battery module 2 is disposed. Air layer 4 and battery module housing part 5 which are provided by partitioning the inside of exterior case 1 with inner wall 3 are closed spaces in a watertight structure.

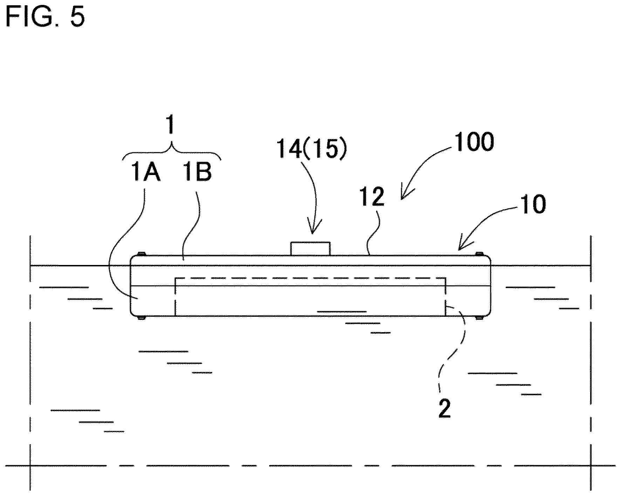

Battery pack 100 is configured to float on water by having a buoyancy more than its weight and making an overall specific gravity 1 or less. As shown in FIG. 5, battery pack 100 is easily recognized from a ship or the like by making exposed part 10 that floats up on the surface of water. The buoyancy specified from the volume of the watertight structure larger than the weight by an amount preferably range from 3% to 20% so that battery pack 100 floating up on the surface of water fluctuating up and down due to waves may be clearly recognized. In battery pack 100, exposed part 10 configured to float up on water is clearly recognized.

Battery pack 100 preferably has a structure that can float up on water even while water enters air layer 4 entirely or partially and reduces the buoyancy. Even when water enters air layer 4 partially or entirely, battery pack 100 floats up on water and is recovered. Battery pack 100 has a large internal volumetric capacity of battery module housing part 5. This is because the buoyancy of battery pack 100 increases by increasing the internal volumetric capacity of battery module housing part 5. In battery pack 100 that floats up when water enters air layer 4, by reducing the internal volumetric capacity of air layer 4 and increasing the internal volumetric capacity of battery module housing part 5, the decrease in buoyancy due to entering of water into air layer 4 can be reduced. However, in battery pack 100 that floats on water when water enters air layer 4, the internal volumetric capacity of battery module housing part 5 is so large that the buoyancy is larger than the weight even in the case that water enters air layer 4 and the buoyancy is reduced.

Battery pack 100 configured to float on water even when a part of exterior case 1 is broken and water enters air layer 4 floats on water and is recovered reliably even when a part of exterior case 1 is broken during use or a part of exterior case 1 is broken by an impact due to dropping. Since battery pack 100 is configured to float on water even when battery pack 100 is dropped into water in the case that a user cannot recognize breakage of exterior case 1, battery pack 100 is configured to float on water and be recovered even when battery pack 100 is not sufficiently controlled.

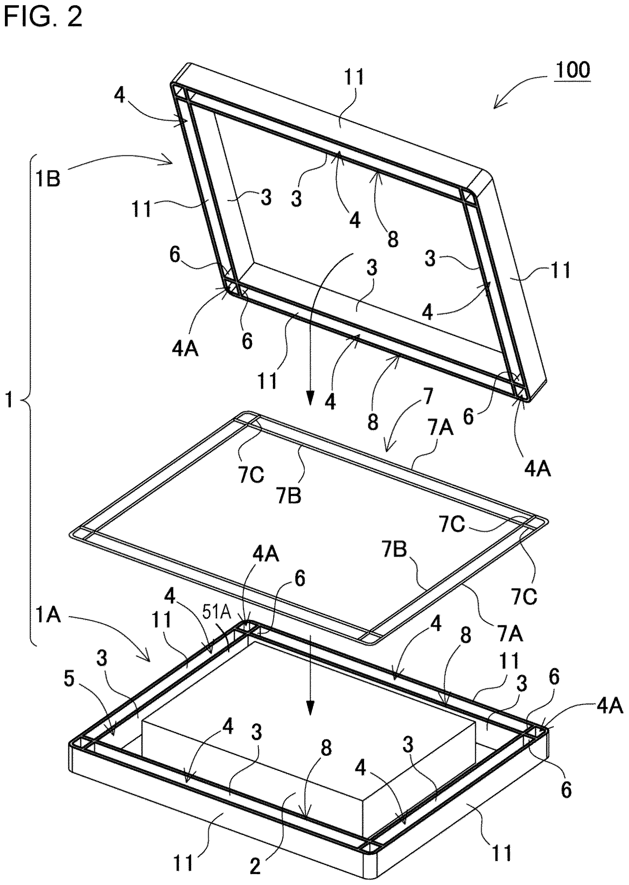

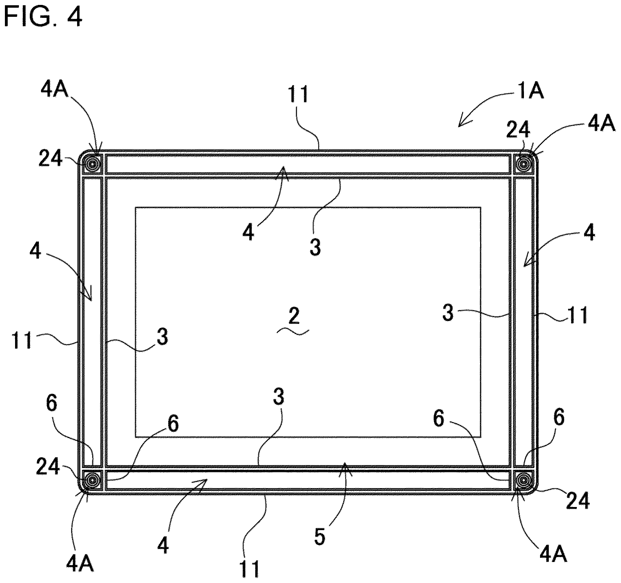

In battery pack 100 in which a part of exterior case 1 is damaged and water enters air layer 4 and which floats in water, as shown in FIGS. 2 and 4, air layer 4 is preferably partitioned into plural regions 54. Each region 54 of the partitioned air layer 4 may be sealed in a water-tight structure. Even if battery pack 100 is broken and water enters a particular air layer 4, water does not enter entire air layer 4, so that reduction of floating up of battery pack 100 due to entering of water into air layer 4 can be reduced. Battery pack 100 which floats in water when water enters air layer 4 eliminates the decrease in buoyancy due to water entering into air layer 4 by increasing the internal volumetric capacity of battery module housing part 5. Therefore, in battery pack 100 which can reduce the entering of water by partitioning air layer 4 into plural regions 54, the decrease of buoyancy due to the entering water is reduced, so that the increase in volumetric capacity with respect to the internal volumetric capacity of battery module housing part 5 can be reduced in order to eliminate the decrease in buoyancy due to the entering of water, and the battery pack as a whole can be made compact.

One or more partition ribs 6 may be molded unitarily with exterior case 1 shown in FIGS. 2 to 3, and partition air layer 4 to have a water-tight structure. Each partition rib 6 partitions air layer 4 in a water-tight structure by coupling, at both sides of each partition rib 6, to facing surfaces of exterior case 1 and inner wall 3. Partition rib 6 may be molded unitarily with exterior case 1 and inner wall 3 in the molding of exterior case 1. Battery pack 100 advantageously allows partition rib 6 to couple exterior case 1 to inner wall 3 so as to enhance the impact resistance strength of exterior case 1. In exterior case 1 shown in FIGS. 2 to 4, inner wall 3 is disposed inside and along outer peripheral wall 11 of exterior case 1, and corner parts of inner wall 3 are coupled to outer peripheral wall 11 using partition rib 6. Each partition rib 6 extends on an extension line of inner wall 3, being flush with inner wall 3, and partition corner air layers 4A of the watertight structure between two adjacent rows of partition ribs 6. In exterior case 1 shown in FIGS. 2 and 4, two rows of partition ribs 6 are molded unitarily with both sides of the corner part of outer peripheral wall 11 that has been molded in a rectangular tubular shape, thereby providing watertight structured corner air layer 4A. Each corner air layer 4A is provided at a corner part that is surrounded by the corner part of outer peripheral wall 11 curved in an arc shape, and two adjacent partition ribs 6 perpendicular to each other. This structure in which a pair of partition ribs 6 are provided at the corner parts of exterior case 1 and partition ribs 6 are not provided in other regions increases the internal volumetric capacity of exterior case 1 and increases floating up.

Corner air layer 4A is located in a region that is most likely to be broken by an impact due to dropping of battery pack 100. When battery pack 100 is dropped, exterior case 1 has a high probability of being broken due to impact at the corner parts. A region located outside corner air layer 4A of exterior case 1 is curved in an arch shape so as to increase the impact resistance strength. Furthermore, since the inner surface of the corner parts of exterior case 1 are supported and reinforced by two partition ribs 6 that intersects each other, thereby effectively preventing breakage due to an impact. Therefore, exterior case 1 with corner air layer 4A can significantly reduce entering of water by breakage due to impact. Furthermore, even if corner air layer 4A is damaged by an extremely strong impact and water enters there, since the internal volumetric capacity is small, reduction of buoyancy due to entering of water is small. To compensate the buoyancy that decreases due to the entering of water into corner air layer 4A, the volumetric capacity that increases the internal volumetric capacity of battery module housing part 5 is reduced to provide a battery pack configured to float on water. This configuration effectively provides a battery pack that can be recovered by allowing the battery pack to float on water even in a state in which the corner part of exterior case 1 is damaged and water enters exterior case 1 while battery pack 10 as a whole is compact.

Battery pack 100 including air layer 4 partitioned into plural regions 54 in a watertight structure reduces the decrease in the volumetric capacity of air layer 4 and reduces the decrease of buoyancy since exterior case 1 is damaged by an impact, such as dropping, and water enters air layer 4. Therefore, battery pack 100 floats on water in a state in which water enters air layer 4 by increasing the volume of battery module housing part 5 which is a volumetric capacity of air layer 4 where water is most likely to enter or a volume of air layer 4 with the maximum volumetric capacity. In battery pack 100 including air layer 4 that is not partitioned into plural regions, since the volumetric capacity of battery module housing part 5 needs to be a volumetric capacity capable of floating up in a state in which water enters entire air layer 4, the volumetric capacity of battery module housing part 5 is considerably large in order to allow battery pack 100 to float up in a state in which water enters entire air layer 4. Battery pack 100 including air layer 4 partitioned into plural regions 54 is advantageous that, compared with battery pack 100 including air layer 4 that is not partitioned, the increase in the volumetric capacity of battery module housing part 5 is reduced so that battery pack 100 can float up even if a predetermined air layer 4 is broken. Therefore, battery pack 100 including air layer 4 partitioned into corner air layers 4Ais configured to float on water with the overall specific gravity of 1 or less while the volumetric capacity of battery module housing part 5 is minimized.

In battery pack 100, as shown in FIG. 5, exposed part 10 exposed to the surface of water is preferably in a horizontal position. Battery pack 100 may be provided by providing air layers 4 on the facing outer peripheral walls 11 and balancing air layers 4 at the corresponding positions. Battery pack 100 that floats up on water in this position increases the exposed area of exposed part 10 so that floating battery pack 100 may be easily found from a ship located distantly. In battery pack 100 shown in FIGS. 2 and 4, exterior case 1 has a rectangular shape in a plan view, and air layers 4 are disposed on the inner surfaces of outer peripheral walls 11 located on each side of the rectangular shape. In this battery pack 100, the buoyancy acting on air layers 4 provided along the four sides of exterior case 1 is balanced so that exposed part 10 may float up on water in a horizontal position.

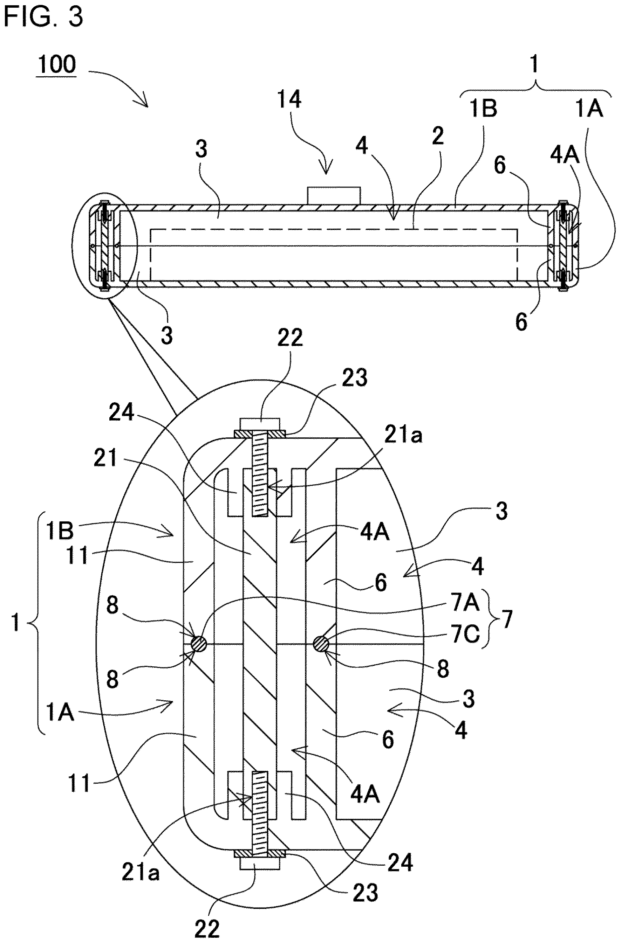

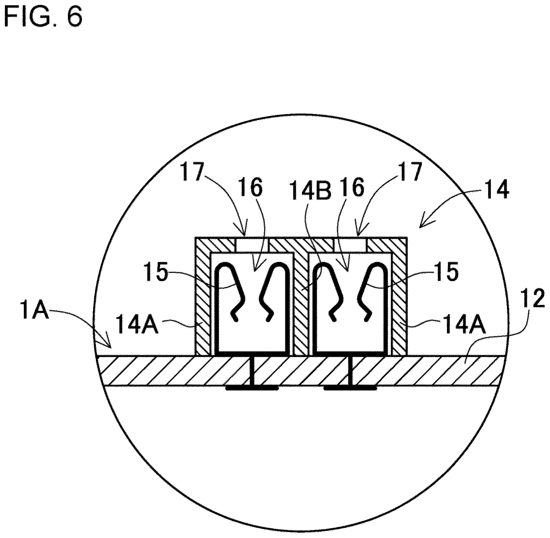

Battery pack 100 shown in FIGS. 3 and 5 includes exposed part 10 exposed in a horizontal position on water as floating plate 12 and output terminal 15 with a waterproof structure is disposed on floating plate 12 as shown in the enlarged sectional view shown in FIG. 6. Exterior case 1 of FIG. 6 includes output connector 14 protruding from floating plate 12 and includes positive and negative output terminals 15 on output connector 14. In battery pack 100, output terminals 15 are exposed on the water in a state of floating on the water. Accordingly, a leakage current flowing through water between positive and negative output terminals 15 can be reduced. This advantage prevents large leakage current from flowing due to dropping into sea water with small electrical resistance.

Output connector 14 shown in FIG. 6 includes tubular peripheral wall 14A that covers the outside of output terminals 15, and partition wall 14B provided between the positive and negative output terminals 15. Each output terminal 15 is disposed in partition chamber 16 partitioned by partition wall 14 B. Therefore, as shown in FIG. 5, in a state in which battery pack 100 floats on water with output connector 14 exposed on the surface of water, even if water intrudes into each partitioned chamber 16 of output connector 14, positive and negative output terminals 15 are not energized through water, and effectively prevent the leakage current from flowing. Furthermore, even if battery pack 100 is dropped into water in an upside-down posture from the posture shown in FIG. 5, since each partitioned chamber 16 is disposed in the water in a downward opening posture, water can be prevented from intruding into the inside of partitioned chamber 16 by the air remaining in partitioned chamber 16, and a leakage electric current can be effectively prevented from flowing. In particular, output connector 14 shown in FIG. 6 is a female connector, and opening window 17 into which an output rod of a male connector to be inserted into the female connector is opened at the tip surface of output connector 14. An opening area of opening window 17 may be smaller than partitioned chamber 16. This configuration prevents output connector 14 from allowing water to intrude into the inside of partitioned chamber 16.

Exterior case 1 shown in FIG. 2 includes lower case 1A having upper opening 51A therein opened upward and upper case 1B closing upper opening 51A of lower case 1Ato provide a watertight structure. Each of lower case 1A and upper case 1B is formed by unitarily molding exterior case 1, inner wall 3, and partition ribs 6. Lower case 1A and upper case 1B are coupled to each other with gasket 7 interposed between the cases to form air layer 4 with a watertight structure, and also to form battery module housing part 5 with a watertight structure. Gasket 7 is formed by unitarily molding outer ring part 7A configured to be sandwiched by respective opposite surfaces of lower case 1A and upper case 1B of exterior case 1, inner ring part 7B configured to be interposed between respective opposite surfaces of inner walls 3 of lower case 1A and upper case 1B, and coupling part 7C configured to be sandwiched by respective opposite surfaces of partition ribs 6 of lower case 1A and upper case 1B. Gasket 7 is made of a rubber elastic body. As shown in the partially enlarged view of FIG. 3, exterior case 1, inner wall 3, and partition ribs 6 have guide grooves 8 provided therein for guiding gasket 7 on the opposite surfaces. Gasket 7 guided to guiding grooves 8 are elastically compressed to seal the opposing surfaces with a watertight structure.

The present disclosure does not specify a structure for coupling lower case 1A and upper case 1B to each other, but lower case 1A and upper case 1B may be coupled to each other by any coupling structure capable of coupling lower case 1A and upper case 1B to each other with a watertight structure. For example, lower case 1A and upper case 1B may be coupled to each other with a coupling tool, such as a fastening screw with gasket 7 sandwiched by the respective opposite surfaces to be coupled with a water-tight structure. The partially enlarged view of FIG. 3 shows a specific example in which lower case 1A and upper case 1B are coupled to each other with a watertight structure. This coupling structure couples lower case 1A to upper case 1B with fastening screw 22 and coupling rod 21 interposed between the cases. Coupling rod 21 is disposed in a fixed position with both ends of the rod by guiding tubular ribs 24 unitarily molded with the inner surfaces of lower case 1A and upper case 1B. In order to provide the waterproof structure, fastening screw 22 couples lower case 1A to upper case 1B into coupling rod 21 in a waterproof structure by sandwiching seal 23 made of the rubber-like elastic body between the screw and a surface of exterior case 1, and screwing a threaded part into female threaded hole 21a of coupling rod 21. Furthermore, in the coupling structure of FIG. 3, coupling rod 21 is disposed in air layer 4, but coupling rod 21 may be disposed in battery module housing part 5. Furthermore, FIG. 3 shows an example of the coupling structure, but does not limit the coupling structure between lower case 1A and upper case 1B to the above structure. Lower case 1A and upper case 1B may be coupled to each other by, for example, ultrasonically welding the respective opposite surfaces of the cases to be coupled with a watertight structure.

In exterior case 1 shown in FIGS. 1 to 3, lower case 1A and upper case 1B are molded to have a deep container shapes. In exterior case 1 of the drawing, since lower case 1A and upper case 1B are molded to have the same shape with equal depth, lower case 1A and upper case 1B may advantageously be manufactured with the same die at low cost.

### Exemplary Embodiment 2

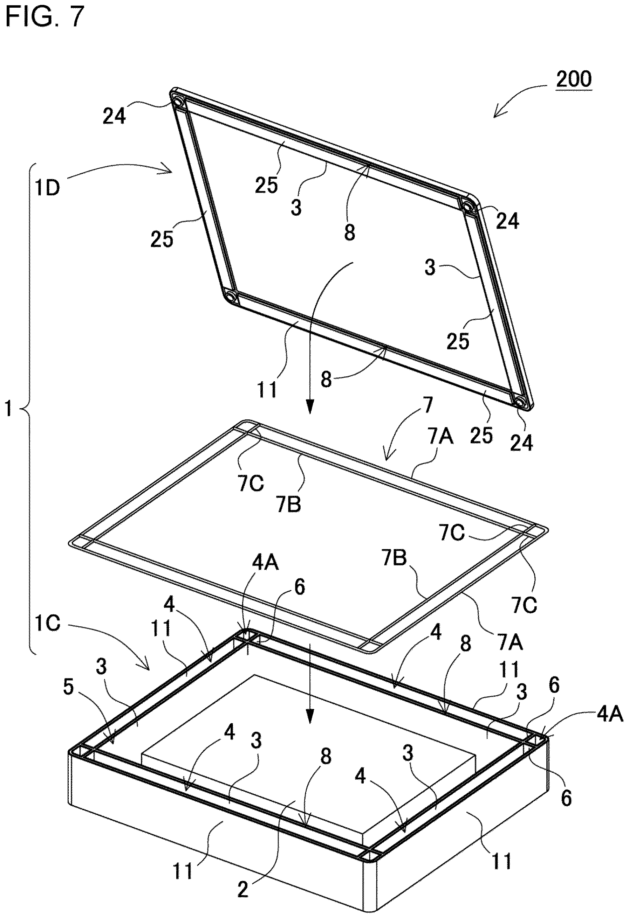

As shown in FIG. 7, in a battery pack, exterior case 1 may include lower case 1C with a depth and upper case 1D that is flat. Lower case 1C of battery pack 200 shown in FIG. 7 is molded to have a container shape with an upper side opening and has a depth capable of accommodating battery module 2 therein. Upper case 1D includes stepped protrusions 25 to be fitted into openings of air layer 4 provided in lower case 1C along the four sides. Upper case 1D may be coupled while being positioned at a predetermined position by guiding stepped protrusion 25 to the opening of air layer 4 provided in lower case 1C. Upper case 1D is also advantageous to guide stepped protrusion 25 to a region surrounded by outer ring part 7A, inner ring part 7B, and coupling part 7C of gasket 7, thereby positioning gasket 7 with respect to upper case 1D.

### Exemplary Embodiment 3

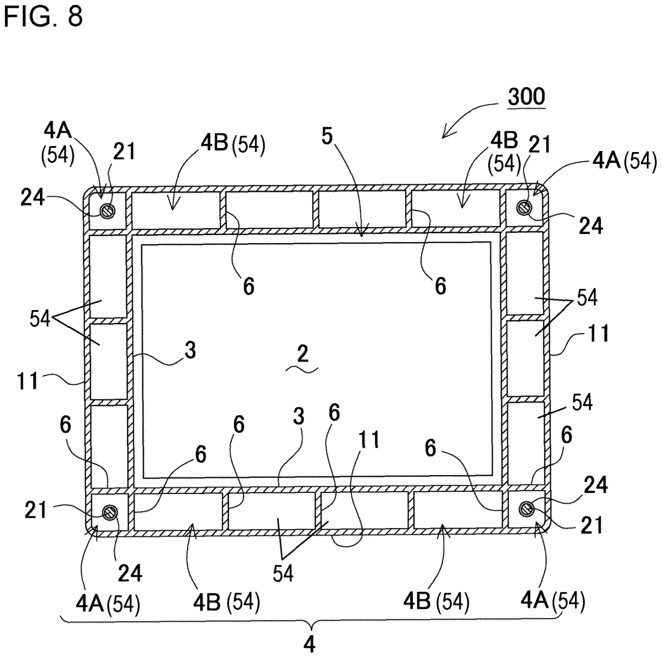

As shown in FIG. 8, in a battery pack, air layer 4 formed on the inner surface of outer peripheral wall 11 positioned in each side of exterior case 1 that is rectangular in a plan view may be partitioned into plural regions. Exterior case 1 shown in FIG. 8 includes inner wall 3 inside along outer peripheral wall 11 to form air layer 4. Corner parts of inner wall 3 are coupled to outer peripheral wall 11 with partition ribs 6 to partition the air layer to corner air layers 4A. Respective middle sections of inner walls 3 are coupled to outer peripheral wall 11 with partition ribs 6 to partition the air layer into air layers 4 formed along the four sides of the rectangular shape into plural side air layers 4B. In exterior case 1, air layer 4 formed at the inner side of outer peripheral wall 11 is positioned into corner air layers 4A formed at the four rectangular corner parts and side air layers 4B formed at each sides of the rectangular shape. In addition, the partitioned corner air layers 4A and side air layers 4B have watertight structures.

Battery pack 300 has a large volumetric capacity of entire air layer 4 to increase the buoyancy, and decreases the volumetric capacity of battery module housing part 5 accordingly. In particular, as shown in FIG. 8, in air layer 4 partitioned into corner air layers 4A and side air layers 4B, even if exterior case 1 is broken due to an impact, such as dropping, to allow water to enter any one of air layers 4, the reduction of the buoyancy is prevented in the other air layers 4 in which water does not enter. Therefore, battery module housing part 5 may have a minimum volumetric capacity that can house battery module 2, while having a large volumetric capacity of air layer 4 and the overall specific gravity of 1 or less. Battery pack 300 includes a lot of partition ribs 6 in air layer 4, so that the rigidity of exterior case 1 may be enhanced to strengthen the impact strength, and the reduction of buoyancy in a state in which exterior case 1 is broken and air layer 4 in which water enters can be reduced by dividing air layer 4 into smaller regions.

### Industrial Applicability

A battery pack of the present disclosure may be suitably used as a power source for various equipment used in motorized outboard motor or on a ship as a battery pack that can be allowed to float in the water and recovered even if the battery pack is dropped in water.

### Reference Signs List

100, 200, 300 battery pack
1 exterior case
1A,1C lowercase
1B,1D uppercase
2 battery module
3 inner wall
4 air layer
4A corner air layer
4B side air layer
5 battery module housing part
6 partition rib
7 gasket
7A outer ring part
7B inner ring part
7C coupling part
8 guide groove
10 exposed part
11 outer peripheral wall
12 floating plate
14 output connector
14A peripheral wall
14B partition wall
15 output terminal
16 partitioned chamber
17 opening window
21 coupling rod
21a female threaded hole
22 fastening screw
23 seal
24 tubular rib
25 stepped protrusion

## Claims

1. A battery pack comprising a battery module, an exterior case, and an inner wall, the exterior case accommodating the battery module therein, wherein
the exterior case has a watertight structure and a volume to allow the battery pack to have an overall specific gravity of 1 or less,
the inner wall is molded unitarily with the exterior case along an inner surface of the exterior case,
an air layer with a watertight structure is formed between the inner wall and the exterior case,
the exterior case has a multilayer float structure including the exterior case, the air layer, and the inner wall, and
an inside of the inner wall has a watertight structure and constitutes a battery module housing part housing the battery module therein.

2. The battery pack according to claim 1, wherein a volumetric capacity of the battery module housing part is a volumetric capacity with an overall specific gravity of the battery pack of 1 or less while water enters the air layer.

3. The battery pack according to claim 1 or 2, wherein the air layer has a watertight structure and is partitioned into a plurality of regions.

4. The battery pack according to claim 3, further comprising
one or more partition ribs each coupled to the exterior case and the inner wall, and partitioning the air layer into the plurality of regions, wherein
the one or more partition ribs are molded unitarily with the exterior case and the inner wall.

5. The battery pack according to claim 4, wherein
the one or more partition ribs comprises a pair of partition ribs provided at both sides of a corner part of the exterior case, and
the plurality of regions of the air layer includes a corner air layer having a watertight structure provided between the pair of partition ribs.

6. The battery pack according to claim 5, wherein the battery module housing part has a volumetric capacity to allow the battery pack to have an overall specific gravity of 1 or less while water enters the corner air layer.

7. The battery pack according to any one of claims 1 to 6, wherein the exterior case includes an outer peripheral wall, and the air layer faces the outer peripheral wall.

8. The battery pack according to claim 7, wherein the exterior case has a rectangular shape in a plan view, and the air layer is disposed on an inner surface of the outer peripheral wall located at each side of the rectangular shape.

9. The battery pack according to any one of claims 1 to 8, wherein the exterior case includes a watertight structure and a volume with an overall specific gravity of the battery pack of less than 1.

10. The battery pack according to any one of claims 1 to 9, wherein the battery pack is configured to float on water.

11. The battery pack according to claim 10, wherein
the exterior case includes an exposed part configured to be exposed from a surface of water when the battery pack floats on the water, and
the battery pack further comprises an output terminal having a waterproof structure and fixed to the exposed part of the exterior case.

12. The battery pack according to any one of claims 1 to 11, wherein
the exterior case comprises:
a lower case having an upper opening; and
an upper case closing the upper opening of the lower case so as to allow the exterior case to have a watertight structure, and
the lower case and the upper case are coupled to each other to have a watertight structure.
